# EUROPÄISCHE PATENTANMELDUNG

(11) **EP 3 725 966 A1**
(43) Veröffentlichungstag der Anmeldung: **21.10.2020**
(21) Anmeldenummer: 19169664.0
(22) Anmeldetag: 16.04.2019
(51) Int. Cl.: E04B 1/68, E04B 2/86, B32B 7/12

(54) **FUGENABDICHTUNGSELEMENT**

(71) Anmelder: Betten, Günter, 26639 Wiesmoor (DE); Geis, Klaus, 22587 Hamburg (DE); Falke, Jörg, 49324 Melle (DE)
(72) Erfinder: Betten, Günter, 26639 Wiesmoor (DE); Geis, Klaus, 22587 Hamburg (DE); Falke, Jörg, 49324 Melle (DE)
(74) Vertreter: Fleuchaus, Michael A.

(57) **Zusammenfassung**

Fugenabdichtungselement (1) zur Abdichtung von Fugen zwischen zwei Betonbauteilen (5, 6), welches ein Trägerelement (2), eine zumindest teilflächig auf dem Trägerelement aufgebrachte Kontaktbeschichtung (3) und eine auf der Kontaktbeschichtung (3) aufgebrachte Mineralbeschichtung (4) aufweist, wobei die Kontaktbeschichtung (3) als wasserfreies drucksensibles Adhäsiv ausgebildet ist.

## Beschreibung

Die vorliegende Erfindung betrifft ein Fugenabdichtungselement zur Abdichtung von Fugen zwischen zwei Betonbauteilen gemäß dem Oberbegriff des Anspruchs 1.

Solche Fugenabdichtungselemente werden üblicherweise im Beton- und Stahlbetonbau eingesetzt, bei dem Betonierfugen (sog. Arbeitsfugen) oder Sollrissfugen erforderlich sind. Solche Betonierfugen entstehen, wenn Betonbauteile zeitlich nacheinander erstellt werden wie z. b. wenn auf eine gegossene Bodenplatte nachträglich eine Wand aufbetoniert wird, oder Bodenplattenabschnitte bzw. Wandabschnitte zeitlich nacheinander erstellt werden. Ebenso entstehen diese Fugen, wenn vorgefertigte Betonelemente wie Filigranwände, Mehrfachwände oder Hohlwände aneinander gesetzt und zuverlässig abgedichtet werden müssen, um den Eintritt von Feuchtigkeit/Wasser zwischen die Betonelemente zu verhindern.

Um eine solche Wasserundurchlässigkeit herzustellen, ist es aus dem Stand der Technik bekannt, solche Fugenabdichtungselemente beispielsweise mit einer quellfähigen Bentonitbeschichtung, Butyl- oder Bitumenbeschichtung,
oder einer zementhaltigen, mineralischen Beschichtung zu versehen. Bekannt ist auch, Beschichtungen mit einem Bindemittel und Abdichtmaterial auf einem solchen Trägerelement aufzubringen.

Aufgabe der vorliegenden Erfindung ist es, ein Fugenabdichtungselement zur Abdichtung von Fugen zwischen zwei Betonbauteilen bereitzustellen, mit dem ein einfacher Einbau sowie eine zuverlässige wasserdichte Abdichtung gewährleistet ist.

Diese Aufgabe wird durch ein Fugenabdichtungselement mit den Merkmalen des Anspruchs 1 gelöst.

Das erfindungsgemäße Fugenabdichtungselement zur Abdichtung von Fugen zwischen zwei Betonbauteilen weist ein Trägerelement auf, eine zumindest teilflächig auf dem Trägerelement aufgebrachte Kontaktbeschichtung und eine auf der Kontaktbeschichtung aufgebrachte Mineralbeschichtung.

Die Kontaktbeschichtung ist dabei als wasserfreies, drucksensibles Adhäsiv ausgebildet.

Ein solches Fugenabdichtungselement mit einer solchen Kontaktbeschichtung aus wasserfreiem drucksensiblem Adhäsiv und der darauf aufgebrachten Mineralbeschichtung ist in einfacher Weise in dafür vorgesehen Fugen zwischen Betonbauteilen einbaubar.

Das drucksensible Adhäsiv hat den Vorteil, dass der Haftverbund zwischen dem Fugenabdichtungselement und den Betonbauteilen mit wachsendem Betondruck ansteigt, wodurch eine Hinterläufigkeit bzw. Umläufigkeit von Wasser absolut vermieden wird.

Darüber hinaus hat die auf dieser Kontaktbeschichtung aufgebrachte Mineralbeschichtung den Vorteil einer deutlich vergrößerten Oberfläche des Fugenabdichtungselements, so dass dadurch bedingt die für eindringendes Wasser zurückzulegende Strecke deutlich, um ein tausendfaches vergrößert und gleichzeitig die Anhaftungsfläche des Frischbetons massiv erhöht wird.

Vorteilhafte Ausführungsvarianten der Erfindung sind Gegenstand der Unteransprüche.

Gemäß einer vorteilhaften Ausführungsvariante ist die Kontaktbeschichtung und die Mineralbeschichtung beidseitig auf dem Trägerelement aufgebracht.

Gemäß einer vorteilhaften Weiterbildung weist die Mineralbeschichtung farblich unterschiedliche Bereiche auf, die nebeneinander auf der Kontaktbeschichtung aufgebracht, das Fugenabdichtungselement in farbig unterteilte Bereiche aufteilt.

Solche farblich unterschiedlichen Bereiche ermöglichen insbesondere ein einfaches Überprüfen der korrekten Einbautiefe des Fugenabdichtungselements in die Fuge zwischen den Betonbauteilen.

Eine solche Farbaufteilung des Fugenabdichtungselements ermöglicht insbesondere auch eine Überprüfung des korrekten Einbaus des Fugenabdichtungselements zwischen dem ersten und zweiten Betonierabschnitt, also noch so rechtzeitig, um eventuelle weitere Abdichtungsprodukte noch zusätzlich zum ggfs. falsch eingebauten Fugenabdichtungselement einzubauen.

Ebenso ermöglicht die farbliche Aufteilung die einfache Überprüfung des korrekten Einbaus im Nachhinein, falls es zu einem Schaden kam, nach dem Ziehen eines Bohrkerns.

Besonders bevorzugt weist die Mineralbeschichtung zwei farblich unterschiedliche Bereiche auf, die in Gestalt zwei nebeneinander angeordneter Streifen angeordnet sind.

Durch die Vorsehung von zwei farblich unterschiedlichen Bereichen ist bereits der korrekte Einbau des Fugenabdichtungselements gewährleistet.

Denkbar ist natürlich auch, mehr als zwei farblich unterschiedliche Bereiche vorzusehen.

Gemäß einer bevorzugten Ausführungsvariante bestehen die farblich unterschiedlichen Bereiche aus unterschiedlichen Materialien.

Denkbar ist das Aufbringen der Mineralbeschichtung auf der Kontaktbeschichtung in einem Teilbereich und in einem weiteren Teilbereich das Aufbringen einer Beschichtung aus einem anderen Material, beispielsweise in Gestalt eines Butylstreifens oder eines quellfähigen Bentonitklebestreifens.

Gemäß einer bevorzugten Ausführungsvariante sind sämtliche Bereiche der Mineralbeschichtung auf der Kontaktbeschichtung aufgebracht.

Denkbar ist jedoch auch gemäß einer weiteren Ausführungsvariante, den zweiten Bereich der Mineralbeschichtung direkt auf dem Trägerelement aufzubringen.

Gemäß einer vorteilhaften Ausgestaltung des erfindungsgemäßen Fugenabdichtungselements ist die Kontaktbeschichtung als Acrylat, Polyurethan, Schmelzkleber, Polyolefin, Copolymeren, Hotmelt, Ethylen-Vinyl-Acetat, Dispersionskleber, Kautschuk oder als Gemisch aus wenigstens zwei der vorgenannten Stoffe ausgebildet.

Gemäß einer weiteren vorteilhaften Ausführungsvariante der Erfindung ist das Trägerelement als Trägerblech, Kunststoffprofil, Hohlkammerprofil oder als mineralischer Träger ausgebildet.

Die Mineralbeschichtung enthält gemäß einer weiteren vorteilhaften Ausführungsvariante bevorzugt wasserquellfähiges Granulat oder besteht aus einem solchen wasserquellfähigen Granulat.

Eine erfindungsgemäße Abdichtungsanordnung mit mehreren wie oben beschriebenen Fugenabdichtungselementen zeichnet sich dadurch aus, dass einander benachbart angeordnete Fugenabdichtungselemente über eine Klemmverbindung oder einen Dichtstreifen, insbesondere in Gestalt eines Butylstreifens oder eines quellfähigen Bentonitklebestreifens miteinander gekoppelt sind.

Der Dichtstreifen ist dabei bevorzugt als Klebestreifen ausgebildet.

Nachfolgend werden bevorzugte Ausführungsbeispiele der Erfindung anhand der beiliegenden Zeichnungen näher erläutert. Es zeigen:
- Figur 1: eine schematische Querschnittsansicht durch eine Ausführungsvariante eines erfindungsgemäßen Fugenabdichtungselements mit beidseitig aufgebrachter Kontaktbeschichtung und Mineralbeschichtung,
- Figur 2: eine schematische Seitenansicht einer Ausführungsvariante eines erfindungsgemäßen Fugenabdichtungselements mit zwei farblich unterschiedlichen Bereichen, und
- Figur 3: eine schematische Querschnittsansicht typischer Einbausituationen des Fugenabdichtungselements.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Fugenabdichtungselements, des Trägerelements, der Kontaktbeschichtung, der Mineralbeschichtung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

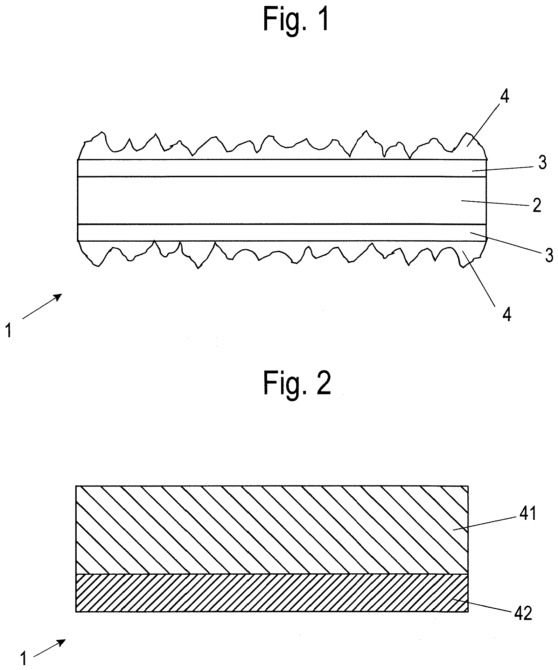

In Figur 1 ist mit dem Bezugszeichen 1 insgesamt eine Ausführungsvariante eines erfindungsgemäßen Fugenabdichtungselements zur Abdichtung von Fugen zwischen zwei Betonbauteilen bezeichnet.

Solche Fugen sind beispielsweise Betonierfugen (sog. Arbeitsfugen 7) oder Sollrissfugen 8 oder Fugen zwischen vorgefertigten Betonelementen bzw. -bauteilen 5, 6 wie Filigranwände, Mehrfachwände oder Hohlwände, die aneinander gesetzt und zuverlässig abgedichtet werden müssen.

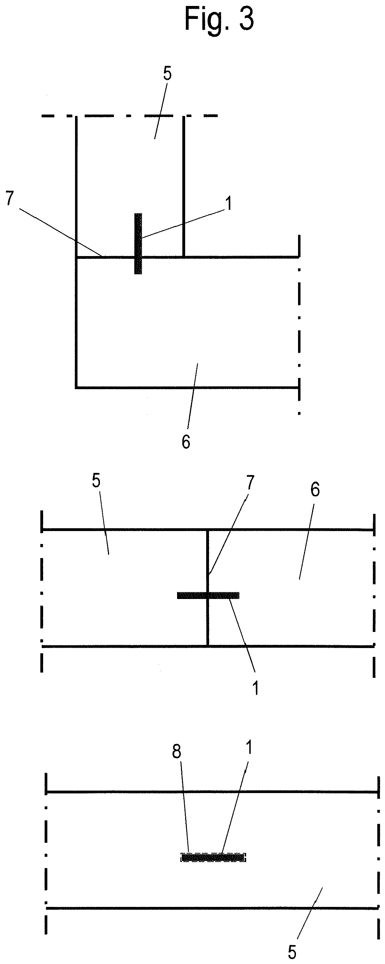

Figur 3 zeigt typische Einbausituationen für ein solches Fugenabdichtungselement 1 in sog. Arbeitsfugen 7 bzw. einer Sollrissfuge 8.

Wie in Figur 1 dargestellt, weist das Fugenabdichtungselement 1 ein Trägerelement 2 auf, das bevorzugt als Trägerblech ausgebildet ist.

Denkbar ist auch eine Ausbildung des Trägerelements 2 als Kunststoffprofil, Hohlkammerprofil oder als mineralischer Träger.

Das Fugenabdichtungselement 1 weist des Weiteren eine zumindest teilflächig auf dem Trägerelement aufgebrachte Kontaktbeschichtung 3 auf sowie eine auf der Kontaktbeschichtung 3 aufgebrachte Mineralbeschichtung 4.

Die Kontaktbeschichtung 3 ist dabei als wasserfreies drucksensibles Adhäsiv ausgebildet.

Die Kontaktbeschichtung 3 kann dabei hart oder elastisch sein.
Als Adhäsiv kommen dabei insbesondere Acrylat, Polyurethan, Schmelzkleber, Polyolefin, Copolymeren, Hotmelt, Ethylen-Vinyl-Acetat, Dispersionskleber oder Kautschuk in Frage. Denkbar ist auch ein Gemisch aus wenigstens zwei der vorgenannten Stoffe.

Die Mineralbeschichtung 4 kann als aktive oder nicht aktive Mineralbeschichtung ausgebildet sein.

Die Mineralbeschichtung 4 besteht bevorzugt aus einem wasserquellfähigen Granulat, oder einer anderen aktiven Komponente. Denkbar ist auch die Beimengung eines solchen wasserquellfähigen Granulats oder einer anderen aktiven Komponente, in ein Bindemittel. Aktiv kann z. B. eine Volumenvergrößerung durch Quellung sein.

Die Granulatbeschichtung wird bevorzugt im Trockenverfahren auf die Kontaktbeschichtung 3 oder das Trägerelement 2 aufgebracht, d.h. ohne vorheriges Lösen der Granulate in Wasser oder einer Schlämme.

Als Basis für die Mineralbeschichtung 4 dienen insbesondere Siliciumdioxid, Puzzolan, Carbonat, Calciumcarbonat, Calciumsilikat, Silikat, Blähsand, ein quellendes aktives Granulat oder ein quellendes Kunststoffgranulat oder auch Quarzsand in unterschiedlichen Korngrößen, ohne dass diese vor dem Aufbringen auf den Kontaktkleber in Wasser oder sonstigem flüssigen Stoff gelöst wurden.

Wie in Figur 1 gezeigt ist, erhöht sich durch die Mineralbeschichtung 4 auf der Kontaktbeschichtung 3 die Oberfläche des Fugenabdichtungselements 1 deutlich.

Mit einer solchen Mineralbeschichtung 4 ist eine Oberflächenvergrößerung bis zu einen Faktor 10³ oder sogar darüber hinaus ermöglicht.

Bei der in Figur 1 gezeigten Ausführungsvariante des Fugenabdichtungselements 1 sind die Kontaktbeschichtung 3 und die Mineralbeschichtung 4 beidseitig auf dem Trägerelement 2 aufgebracht.

Denkbar ist auch, nur eine Seite des Trägerelements 2 mit einer Kontaktbeschichtung 3 und einer Mineralbeschichtung 4 zu versehen.

Denkbar ist außerdem, auf Teilflächen des Trägerelements 2 die Mineralbeschichtung 4 direkt aufzubringen.

Wie in Figur 2 gezeigt ist, weist die Mineralbeschichtung 4 bevorzugt farblich unterschiedliche Bereiche 41, 42 auf, die nebeneinander aufgebracht das Fugenabdichtungselement 1 in farbig unterteilte Bereiche aufteilt.

Eine solche farbliche Unterteilung des Fugenabdichtungselements 1 hat insbesondere den Vorteil, dass bei der bevorzugten, in Figur 2 gezeigten Ausführungsvariante, durch die zwei farblich unterschiedlichen Bereiche 41, 42 die Einsetztiefe des Fugenabdichtungselements 1 in die Fuge zwischen zwei Betonbauteilen in einfacher Weise eingehalten werden kann.

Darüber hinaus ist auch zu einem späteren Zeitpunkt stets nachvollziehbar ob bzw. dass das Fugenabdichtungselement 1 in korrekter Weise eingebaut wurde und die bauaufsichtlich geregelte Einbautiefe bzw. Betonüberdeckung eingehalten wurde.

Durch die deutliche Farbgebung ist ein wesentlich sicherer und einfacherer und damit schnellerer Einbau möglich. Darüber hinaus entstehen weniger Fehler zur Einhaltung der Betonüberdeckung, welche bei Unterschreitung Probleme in der Standsicherheit mit sich bringen können.

Denkbar ist auch, einen der Bereiche der Mineralbeschichtung 4 direkt auf das Trägerelement 2 aufzubringen. Damit ist ermöglicht, das Fugenabdichtungselement 1 zumindest in zwei farblich unterschiedliche Bereiche aufzuteilen.

Denkbar ist aber auch, die Mineralbeschichtung 4 einfarbig auszuführen.

Die Ausbildung der Kontaktbeschichtung 3 als wasserfreies drucksensibles Adhäsiv hat den Vorteil, dass mit zunehmendem Druck auf die Mineralbeschichtung 4 oder beim Aufquellen derselben der Haftverbund zwischen der Mineralbeschichtung 4 und dem Trägerelement 2 durch das drucksensible Adhäsiv gesteigert wird. Somit entsteht eine äußerst homogene Verbindung zwischen dem Fugenabdichtungselement und dem Umgebungsbeton, so dass eindringendes Wasser keine Möglichkeit der Umläufigkeit findet.

Zur Verbindung zweier solcher Fugenabdichtungselemente 1 zu einer Abdichtungsanordnung mit mehreren Fugenabdichtungselementen 1 werden die Fugenabdichtungselements 1 bevorzugt über eine Klemmverbindung miteinander gekoppelt.

Eine solche Klemmverbindung besteht vorzugsweise aus einer über überlappende Bereiche benachbarter Fugenabdichtungselemente 1 übergestülpter Klammer.

Denkbar ist auch, einander benachbart angeordnete Fugenabdichtungselemente 1 über einen Dichtstreifen, insbesondere in Gestalt eines Butylstreifens, eines quellfähigen Streifens oder Klebestreifens miteinander zu koppeln. Die Streifen sind dabei bevorzugt als selbstklebende Streifen ausgebildet.

Durch die überlappenden Bereiche der benachbarten Fugenabdichtungselemente 1 ist dieser überlappende Bereich im Querschnitt dicker als der Bereich eines Fugenabdichtungselements 1 neben dem überlappenden Bereich, wodurch bedingt durch das wasserfrei drucksensible Adhäsiv der Haftverbund durch den wachsenden Druck nochmals erhöht wird.

### Bezugszeichenliste

- 1: Fugenabdichtungselement
- 2: Trägerelement
- 3: Kontaktbeschichtung
- 4: Mineralbeschichtung
- 41: erster Bereich
- 42: zweiter Bereich
- 5: Betonbauteil
- 6: Betonbauteil
- 7: Arbeitsfuge
- 8: Sollrissfuge

## Patentansprüche

1. Fugenabdichtungselement (1) zur Abdichtung von Fugen zwischen zwei Betonbauteilen (5, 6), aufweisend ein Trägerelement (2), eine zumindest teilflächig auf dem Trägerelement aufgebrachte Kontaktbeschichtung (3) und eine auf der Kontaktbeschichtung (3) aufgebrachte Mineralbeschichtung (4), **dadurch gekennzeichnet, dass** die Kontaktbeschichtung (3) als wasserfreies drucksensibles Adhäsiv ausgebildet ist.

2. Fugenabdichtungselement (1) nach Anspruch 1, **dadurch gekennzeichnet, dass** die Kontaktbeschichtung (3) und die Mineralbeschichtung (4) beidseitig auf dem Trägerelement (2) aufgebracht sind.

3. Fugenabdichtungselement (1) nach Anspruch 1 oder 2, **dadurch gekennzeichnet, dass** die Mineralbeschichtung (4) einfarbig ausgebildet ist.

4. Fugenabdichtungselement (1) nach Anspruch 1 oder 2, **dadurch gekennzeichnet, dass** die Mineralbeschichtung (4) farblich unterschiedliche Bereiche (41, 42) aufweist, die nebeneinander aufgebracht das Fugenabdichtungselement (1) in farbig unterteilte Bereiche aufteilt.

5. Fugenabdichtungselement (1) nach Anspruch 4, **dadurch gekennzeichnet, dass** die Mineralbeschichtung (4) zwei farblich unterschiedliche Bereiche (41, 42) aufweist, die in Gestalt zwei nebeneinander angeordnete Streifen angeordnet sind.

6. Fugenabdichtungselement (1) nach Anspruch 4 oder 5, **dadurch gekennzeichnet, dass** ein erster der farblich unterschiedliche Bereiche (41, 42) als Mineralbeschichtung (4) und ein zweiter der farblich unterschiedliche Bereiche (41, 42) ein zweites Beschichtungsmaterial, insbesondere Butyl oder Bentonit aufweist, welche nebeneinander aufgebracht das Fugenabdichtungselement (1) in farbig unterteilte Bereiche aufteilt.

7. Fugenabdichtungselement (1) nach einem der Ansprüche 4 bis 6, **dadurch gekennzeichnet, dass** der zweite Bereich der Mineralbeschichtung (4) direkt auf dem Trägerelement (2) aufgebracht ist.

8. Fugenabdichtungselement (1) nach einem der vorstehenden Ansprüche, **dadurch gekennzeichnet, dass** die Kontaktbeschichtung (3) als Acrylat, Polyurethan, Schmelzkleber, Polyolefin, Copolymeren, Hotmelt, Ethylen-Vinyl-Acetat, Dispersionskleber, Kautschuk oder als Gemisch aus wenigstens zwei der vorgenannten Stoffe ausgebildet ist.

9. Fugenabdichtungselement (1) nach einem der vorstehenden Ansprüche, **dadurch gekennzeichnet, dass** das Trägerelement (2) als Trägerblech, Kunststoffprofil, Hohlkammerprofil oder als mineralischer Träger ausgebildet ist.

10. Fugenabdichtungselement (1) nach einem der vorstehenden Ansprüche, **dadurch gekennzeichnet, dass** die Mineralbeschichtung (4) Siliciumdioxid, Puzzolan, Carbonat, Calciumcarbonat, Calciumsilikat, Silikat, Quarzsand, Blähsand, wasserquellfähiges Granulat oder eine andere volumenvergrößernde Komponente enthält oder aus diesem besteht.

11. Abdichtungsanordnung mit mehreren Fugenabdichtungselementen (1) nach einem der vorstehenden Ansprüche, **dadurch gekennzeichnet, dass** einander benachbart angeordnete Fugenabdichtungselemente (1) über eine Klemmverbindung oder einen Dichtstreifen, insbesondere Butylstreifen, oder einem quellfähigen Bentonitklebestreifen miteinander gekoppelt bzw. verklebt sind.

12. Abdichtungsanordnung nach Anspruch 11, **dadurch gekennzeichnet, dass** der Dichtstreifen als Klebestreifen ausgebildet ist.
